# FASCICULE DE BREVET EUROPEEN

(11) **EP 3 046 884 B1**
(45) Date de publication et mention de la délivrance du brevet: **17.02.2021**
(21) Numéro de dépôt: 14796175.9
(22) Date de dépôt: 19.09.2014
(51) Int. Cl.: C03C 3/091, C03C 8/02, C03C 8/20, C03C 17/00

(54) **VERRE ÉMAILLÉ TREMPABLE**
TEMPERIERBARES EMAILLIERTES GLAS
TEMPERABLE ENAMELLED GLASS

(30) Priorité: 20.09.2013 FR 1359068
(43) Date de publication de la demande: 27.07.2016
(73) Titulaire: SAINT-GOBAIN GLASS FRANCE, 92400 Courbevoie (FR)
(72) Inventeur: CLABAU, Frédéric, 49100 Angers (FR); GARNIER, Louis, 75012 Paris (FR); BARRAUD, Thomas, 69005 Lyon (FR); RACHET, Vincent, 45590 Saint-Cyr en Val (FR)
(74) Mandataire: Saint-Gobain Recherche
(86) Numéro de dépôt international: PCT/FR2014/052331
(87) Numéro de publication internationale: WO 2015/040334

(56) Documents cités:
- WO-A1-2007/104752
- WO-A1-2011/051459
- WO-A1-2012/004337
- US-A- 4 649 062
- US-A- 5 203 902
- US-A1- 2003 119 647
- US-A1- 2006 154 799
- US-A1- 2010 086 771

## Description

La présente invention a pour objet un substrat en verre ou en vitrocéramique, recouvert d'une couche d'émail sec et trempable, destiné à être utilisé dans le domaine du bâtiment intérieur et/ou extérieur, ainsi que son procédé de fabrication. Le substrat revêtu de la couche d'émail sec est trempable, dans le sens où il est possible de lui faire subir ultérieurement un traitement de trempe à température élevée pour obtenir un verre trempé de sécurité. Le verre émaillé est un verre dont au moins une de ses faces est revêtue d'une couche d'émail opaque qui a été durcie ou traitée thermiquement. Il est notamment destiné à décorer les murs de bâtiment ou des façades de meubles. Des applications de ce produit sont envisageables dans le domaine de la décoration et dans le domaine de l'automobile.

Les émaux utilisés pour revêtir des substrats verriers sont constitués d'une poudre comprenant une fritte de verre, de pigments inorganiques, d'éventuelles autres charges minérales et d'un médium. Le médium, souvent à base de résine, assure une bonne mise en suspension de l'ensemble des particules inorganiques et ainsi sa processabilité à l'état liquide. Le médium se consume lors de la cuisson de l'émail.

L'inconvénient principal de l'émail sec est que la couche déposée sur le substrat possède avant fusion une très faible résistance mécanique et hydrolytique. Il n'est donc pas possible de transporter, stocker, découper, border ou laver un verre revêtu d'un émail sec tant qu'il n'a pas été chauffé et que la couche déposée ne fonde. Ce chauffage est souvent réalisé à haute température, typiquement au-delà de 600°C (cuisson de l'émail). Or, à moins de réaliser une étape supplémentaire de détrempe, on ne peut plus transformer un verre trempé. Par conséquent, l'émail doit impérativement être déposé sur des panneaux aux dimensions définitives. Ce type de produit est peu adapté à l'habitat intérieur où les dimensions sont souvent propres au client.

La solution qui consiste à utiliser une peinture organique permet d'améliorer la tenue mécanique mais n'autorise pas de trempe à haute température. Par conséquent, d'autres solutions ont été envisagées. La demande de brevet WO 2007/104752 décrit un système bi-couche dans lequel une couche de résine jouant le rôle d'une couche de protection sacrificielle est déposée sur une couche d'émail. Ce système nécessite de nombreuses étapes industrielles puisqu'il faut consolider la première couche avant de pouvoir déposer la seconde. Il existe également un risque important de dégradation de la couche d'émail lors du dépôt de la couche de résine. De surcroît, la quantité de résine dans ce système bi-couche est relativement importante et il est difficile d'éliminer la totalité de la résine lors de la trempe, ce qui peut provoquer l'apparition de résidus carbonés noirs laissant des traces sur le substrat revêtu. La demande de brevet

WO 2011/095471 propose donc un procédé de trempe particulier pour ce type de système. La surcouche de protection de l'émail envisagée ne permet toutefois pas d'améliorer l'adhésion de la couche d'émail au substrat verrier. La transformation avant trempe de ce système bi-couche, comme par exemple les étapes de perçage ou polissage qui impliquent la présence d'eau, reste toujours délicate.

Une autre possibilité envisagée pour améliorer la tenue mécanique de l'émail consiste à augmenter la quantité de résine. On peut citer par exemple les demandes WO 2011/051459 ou WO 2012/004337 qui décrivent des revêtements à base d'émail comprenant entre 11 et 40% en poids de matières organiques. Le principal problème de ces couches reste une faible adhésion au verre, principalement en présence d'eau, ce qui conduit fréquemment à une délamination de la couche colorée lors des étapes classiques de bordage ou de perçage du substrat revêtu. Un second problème potentiel, dû aux fortes teneurs en résine et gênant d'un point de vue industriel, est l'apparition de flammes dans le four de trempe et d'importants dégagements gazeux, à même de dégrader les résistances chauffantes du four et de présenter un risque industriel. Comme mentionné précédemment, une forte quantité de résine entraîne également l'apparition de traces noires sur le substrat revêtu après trempe.

On cherche par conséquent à mettre au point un substrat en verre ou en vitrocéramique revêtu d'une couche d'émail qui présente l'opacité recherchée, sans nécessiter un traitement du substrat revêtu à température élevée, tout en restant transportable, stockable, découpable, bordable, lavable et trempable. C'est dans ce cadre que s'inscrit la présente invention.

La présente invention porte sur un substrat en verre ou en vitrocéramique trempable revêtu au moins en partie d'une couche d'émail comprenant une résine organique et des constituants inorganiques dont au moins une fritte de verre et au moins un pigment, dans lequel ladite résine comprend au moins un composé choisi parmi :
- un monomère de type acrylate présentant une fonctionnalité comprise entre 2 et 6 choisi parmi les composés à base de diméthacrylate, diacrylate, triméthacrylate, triacrylate, tétracrylate et pentacrylate, et
- un oligomère insaturé de type acrylate choisi parmi les polyéther acrylates, les styrène acrylates, les époxy acrylates, les uréthane acrylates, les ammonium acrylates et les polyester acrylates,
la teneur en résine dans la couche d'émail sec étant comprise entre 6 et 8,5% en poids par rapport aux constituants inorganiques.

Cette teneur en résine est celle de la couche d'émail sec. Préférentiellement, la teneur en résine dans la couche est inférieure ou égale à 8% poids par rapport aux constituants inorganiques (donc comprise entre 6 et 8% en poids par rapport aux constituants inorganiques).

Le substrat est dit trempable puisqu'il est susceptible d'être trempé pour répondre aux normes de sécurité.

Dans la suite du texte, on parlera de « séchage » de l'émail lorsqu'on fait subir à une couche d'émail liquide un traitement thermique à une température inférieure à 250°C. L'étape de séchage correspond à la réticulation de la résine organique. Après cette étape de séchage, la couche obtenue est une couche d'émail dit « sec ». On parlera de « trempe » lorsque le traitement thermique est réalisé à des températures élevées, classiquement à des températures supérieures à 650°C. A l'issue de ce traitement thermique à haute température, on parle d'émail « cuit ».

Les teneurs en résine organique présente dans la couche d'émail sont données après séchage de l'émail, c'est-à-dire après évaporation des solvants présents, mais avant la trempe. Elles correspondent donc aux teneurs en résine dans la couche d'émail sec. Le pourcentage en poids de résine est déterminé relativement à la quantité totale de matières inorganiques (fritte de verre et charges minérales dont le pigment) présentes dans l'émail. La formulation de la couche d'émail est préparée en mélangeant les différents constituants, soit la fritte de verre, le pigment et les éventuelles autres charges minérales et les composés organiques, de sorte à obtenir la quantité souhaitée de résine organique. Après séchage, il est également possible de déterminer la quantité de résine dans la couche d'émail sec par analyse thermogravimétrique (ATG).

La fonctionnalité d'un monomère traduit le nombre de sites réactifs qu'il possède et peut se définir comme étant le nombre de liaisons covalentes que l'on peut former à partir de ce monomère dans les conditions de la polymérisation.

Avantageusement, la résine organique peut comprendre un monomère de type acrylate présentant une fonctionnalité supérieure ou égale à 2 choisi parmi les composés à base de diméthacrylate, diacrylate, triméthacrylate, triacrylate, tétracrylate et pentacrylate. A titre d'exemples de monomères bifonctionnels, on peut citer le tricyclodécane diméthanol diacrylate, le tricyclodécane diméthanol diméthacrylate, le 1,6-hexanediol diacrylate, le dipropylène glycol diacrylate, le bisphénol A diacrylate éthoxylé, le polyéthylène glycol diacrylate, le néopentyle glycol diacrylate propoxylé, le tétraéthylène glycol diacrylate, le triéthylène glycol diacrylate, le tripropylène glycol diacrylate, le 1,3-butylène glycol diméthacrylate, le 1,4-butanediol diméthacrylate, le 1,6-hexanediol diméthacrylate, le bisphénol A diméthacrylate éthoxylé, le polyéthylène glycol diméthacrylate, le tétraéthylène glycol diméthacrylate, le triéthylène glycol diméthacrylate, l'éthylèneglycoldiméthacrylate et le diéthylène glycol diméthacrylate. A titre d'exemples de monomères trifonctionnels, on peut citer le triméthylolpropane triacrylate éventuellement éthoxylé ou propoxylé, le pentaérythritol triacrylate éthoxylé, le glycéryl triacrylate propoxylé et le triméthylolpropane triméthacrylate.

La résine organique peut comprendre un oligomère insaturé qui est un composé de type acrylate choisi parmi les polyéther acrylates, les styrène acrylates, les époxy acrylates, les uréthane acrylates, les ammonium acrylates et les polyester acrylates. De façon préférée, l'oligomère insaturé est un styrène acrylate ou un polyuréthane acrylate. Ces deux types d'acrylate permettent avantageusement d'avoir à la fois une bonne adhésion de la couche d'émail sur le substrat et une bonne rayabilité.

La résine organique peut également comprendre un mélange de monomères ayant une fonctionnalité comprise entre 2 et 6 et d'un oligomère de type acrylate tels que décrits précédemment.

L'utilisation de ce type de résine organique, dans une quantité moindre que celle décrite dans l'art antérieur, permet avantageusement d'améliorer l'adhésion de la couche d'émail sec sur le substrat, de maintenir une bonne résistance à la rayure et d'obtenir un substrat revêtu qui conserve ces propriétés mécaniques après trempe, tout en limitant la présence de résidus carbonés noirs. Les constituants de la résine permettent notamment d'apporter de la combustibilité au mélange résineux par l'intermédiaire d'un apport d'oxygène au sein de la couche d'émail et permettent la modification de la densité du réseau formé lors de la phase de réticulation de la résine. Ainsi les propriétés mécaniques de l'émail sont améliorées. La limitation de la quantité de résine nécessaire pour atteindre le niveau de propriétés mécaniques visé favorise encore davantage sa combustibilité lors de la trempe.

Avantageusement, la couche d'émail comprend un additif susceptible de libérer de l'oxygène lors du séchage de la couche ou lors de la trempe. Cet additif permet d'améliorer la combustibilité tout en conservant de bonnes propriétés mécaniques. Il peut être choisi parmi l'amidon, les oxalates, les polylactates, les nitrates d'alcalin, les carbonates et les sulfates d'alcalin. De façon préférée, l'additif est un nitrate, un carbonate ou un sulfate d'alcalin. Lorsqu'il est présent, cet additif existe dans une teneur comprise entre 0,01 et 5 % en poids, de préférence entre 0,1 et 3% en poids, par rapport au poids total des constituants de la couche d'émail, sans prendre en compte les solvants.

La couche d'émail présente, après séchage, une épaisseur comprise entre 10 et 200 µm. De façon préférée, cette épaisseur est comprise entre 20 et 150 µm et, encore plus préférentiellement entre 30 et 120 µm, avant trempe. On peut parler ainsi d'épaisseur de l'émail sec. Cette épaisseur doit être suffisante pour que la couche obtenue après séchage soit suffisamment opaque, mais ne doit pas être trop importante pour que la résine puisse brûler entièrement lors de la trempe. La couche d'émail peut recouvrir une partie ou la totalité d'au moins une des faces du substrat.

La couche d'émail sec présente une adhésion sur le substrat mesurée au test du quadrillage selon la norme ISO 2409 :2007 inférieure ou égale à 2, voire inférieure ou égale à 1.

Le substrat est en verre ou en vitrocéramique. Le verre peut être un verre silico-sodo-calcique, mais il peut être également de tout autre type, par exemple de type borosilicate ou alumino-borosilicate. Il peut être clair ou coloré.

La rayabilité du substrat revêtu est mesurée en effectuant un test Clemen, selon la norme ISO 1518-1 :2011. La couche d'émail sec présente une rayabilité d'au moins 2 N, ce qui est suffisant pour les opérations de transformation industrielle.

Les revêtements obtenus sont également caractérisés par la mesure de la composante de clarté L*. La coordonnée colorimétrique L* est calculée en prenant en compte l'illuminant D65 et l'observateur de référence CIE-1931. Il s'agit de coordonnées colorimétriques en réflexion. La composante L* définit la clarté, qui va de la valeur 0 pour le noir à la valeur 100 pour le blanc. Une valeur de L* inférieure à 85 pour un émail blanc sera caractéristique de l'apparition pendant la trempe de résidus carbonés noirs. La valeur de L* mesurée après trempe est donc représentative de la présence des résidus carbonés noirs dans la couche de revêtement d'émail. Les performances recherchées sont atteintes si la valeur de L* reste supérieure à 85 après la trempe. Dans les exemples présentés ci-après, les valeurs de L* données correspondent à des mesures effectuées en réflexion du côté de la couche d'émail.

Le substrat revêtu de la couche d'émail sec est « trempable » et peut ainsi remplir la norme de sécurité EN 12150-1 :2000.

La présente invention porte également sur un procédé de préparation d'un substrat en verre ou en vitrocéramique revêtu d'une couche d'émail, tel que décrit précédemment. Le procédé de préparation comprend les étapes suivantes :
a) on dépose, sur au moins une partie d'une des faces dudit substrat, une couche d'émail comprenant au moins des constituants inorganiques dont une fritte de verre et un pigment et 6 à 8,5% en poids par rapport aux constituants inorganiques d'une résine organique qui comprend au moins un composé choisi parmi un monomère de type acrylate présentant une fonctionnalité comprise entre 2 et 6 choisi parmi les composés à base de diméthacrylate, diacrylate, triméthacrylate, triacrylate, tétracrylate et pentacrylate et un oligomère insaturé de type acrylate choisi parmi les polyéther acrylates, les styrène acrylates, les époxy acrylates, les uréthane acrylates, les ammonium acrylates et les polyester acrylates,
b) on sèche le substrat revêtu à une température inférieure à 250°C, de préférence inférieure à 200°C.

Le dépôt de la couche réalisé à l'étape a) peut être effectué par toute technique connue de l'homme de l'art. La couche liquide (ou pâteuse) peut notamment être déposée par sérigraphie ou selon la technique du rideau.

En fonction de l'épaisseur souhaitée, il est envisageable d'effectuer plusieurs étapes de dépôt successives. De façon préférée, chaque étape de dépôt est suivie d'une étape de séchage avant de réaliser l'étape de dépôt suivante.

Le substrat ainsi obtenu est trempable et peut, si l'utilisateur le souhaite, être soumis à une étape de trempe à une température supérieure à 650°C.

Les exemples ci-dessous illustrent l'invention sans en limiter la portée.

### Exempte 1 :

Une composition d'émail A est préparée en mélangeant une fritte de verre dont la composition est donnée ci-dessous, un pigment inorganique blanc à base de dioxyde de titane commercialisé par la société KRONOS et 7% en poids par rapport aux constituants inorganiques d'une résine thermodurcissable de type styrène acrylate commercialisée par la société CYTEC sous le nom VIACRYL™ SC 6827w/46WA dans de l'eau.

La fritte de verre présente la composition pondérale suivante :

| | |
|---|---|
| SiO₂ | 45 % |
| B₂O₃ | 17 % |
| Al₂O₃ | 13 % |
| Na₂O | 2 % |
| K₂O | 3 % |
| Li₂O | 2% |
| BaO | 14 % |
| MgO | 4 % |

Le mélange liquide est déposé par sérigraphie sur un substrat en verre extra-clair de type Diamant® préalablement nettoyé, puis est réticulé à 150°C (étape de séchage), pendant une durée de 20 minutes. L'épaisseur de la couche d'émail sec donc après séchage est de l'ordre de 120 µm.

Une composition d'émail B est préparée comme décrit ci-dessus en utilisant 7% en poids par rapport aux constituants inorganiques d'une résine constituée d'un mélange de monomères acrylates di- et tri-fonctionnels (25% de triméthylolpropane triacrylate propoxylé, vendu par Sartomer sous la référence SR492 et 25% de tricyclodécanedimethanol diacrylate, vendu par Sartomer sous la référence SR833S) avec un oligomère polyuréthane acrylate (référence CN9010EU, commercialisé par Sartomer), le ratio pondéral monomère/oligomère étant de 50/50.

Le mélange liquide est déposé sur un substrat en verre préalablement nettoyé, puis est réticulé à 150°C (étape de séchage), pendant une durée de 20 minutes. L'épaisseur de la couche d'émail sec (donc après séchage) est de l'ordre de 120 µm.

Une composition d'émail C est préparée de la même façon que la composition A, en ajoutant en plus 0,5% en poids de nitrate de potassium KNO₃. Le mélange liquide est déposé sur un substrat en verre préalablement nettoyé, puis est réticulé à 150°C (étape de séchage), pendant une durée de 20 minutes. L'épaisseur de la couche d'émail sec (donc après séchage) est de l'ordre de 120 µm.

Les performances avant et après trempe des revêtements sont comparées avec celles du produit Emalit®, qui est un émail comprenant 3% en poids de résine cellulosique, et avec celles d'un émail automobile classique comprenant 15% en poids de résine acrylate et dans lequel le pigment noir habituellement utilisé dans l'automobile a été remplacé par un pigment blanc.

Les résultats obtenus sont donnés dans le tableau suivant :

| | Rayabilité avant trempe (N) (émail sec) | Adhésion avant trempe (émail sec) | L* après trempe à 700°C pendant 10 minutes (émail cuit) |
|---|---|---|---|
| Email A selon l'invention | 2 | 1 | 88 |
| Email B selon l'invention | 2 | 2 | 89,7 |
| Email C selon l'invention | 2 | 2 | 91,8 |
| Emalit® (comparatif) | 2 | 5 | 91,3 |
| Email automobile (comparatif) | 5 | 1 | 60 |

Si on compare les propriétés mécaniques obtenues pour l'Emalit® et l'émail automobile, on constate que la rayabilité et l'adhésion sont largement améliorées avec l'utilisation d'une plus grande quantité de résine (la note d'adhésion est d'autant plus basse que la couche adhère au substrat). Toutefois, cette amélioration se fait au détriment de la qualité du substrat revêtu après trempe, puisque la faible valeur de L* après trempe indique la présence d'une quantité importante de résidus carbonés noirs dans le cas de l'émail automobile.

Les compositions d'émail A, B et C selon la présente invention permettent d'assurer à la fois une bonne tenue mécanique et une bonne combustibilité. Les produits ainsi obtenus répondent aux spécifications de l'application recherchée.

### Exemple 2

Trois compositions d'émail ont été préparées de la même façon que la composition A de l'exemple 1, en faisant varier le taux de résine VIACRYL™ SC 6827w/46WA. Les teneurs en résine dans la couche d'émail après séchage sont respectivement de 2.5, 4, 6 et 16% en poids. L'application de la couche d'émail de 80 µm a été réalisée à l'aide d'un tire film sur un verre extra-clair de type Diamant®.

Les caractéristiques mécaniques obtenues sur ces échantillons sont résumées dans le tableau suivant :

| Teneur en résine (% en poids) | Rayabilité avant trempe (en N) (émail sec) | Adhésion avant trempe (émail sec) | L* après trempe à 700°C pendant 10 minutes (émail cuit) |
|---|---|---|---|
| 2.5% | Moins de 1 | 3 | 90 |
| 4% | 1 | 3 | 88 |
| 6% | 2 | 2 | 87 |
| 8% | 2 | 2 | 86 |
| 16% | 3 | 0 | 84 |

## Revendications

1. Substrat en verre ou en vitrocéramique trempable revêtu au moins en partie d'une couche d'émail comprenant une résine organique et des constituants inorganiques dont au moins une fritte de verre et au moins un pigment, **caractérisé en ce que** ladite résine comprend au moins un composé choisi parmi :
- un monomère de type acrylate présentant une fonctionnalité comprise entre 2 et 6 choisi parmi les composés à base de diméthacrylate, diacrylate, triméthacrylate, triacrylate, tétracrylate et pentacrylate, et
- un oligomère insaturé de type acrylate choisi parmi les polyéther acrylates, les styrène acrylates, les époxy acrylates, les uréthane acrylates, les ammonium acrylates et les polyester acrylates,
la teneur en résine dans la couche d'émail sec étant comprise entre 6 et 8,5% en poids par rapport aux constituants inorganiques.

2. Substrat selon la revendication 1 **caractérisé en ce que** la teneur en résine est inférieure ou égale à 8% en poids par rapport aux constituants inorganiques.

3. Substrat selon l'une des revendications 1 ou 2 **caractérisé en ce que** l'oligomère insaturé est un styrène acrylate ou un polyuréthane acrylate.

4. Substrat selon l'une des revendications précédentes **caractérisé en ce que** la couche d'émail comprend en outre au moins un additif choisi parmi l'amidon, les oxalates, les polylactates, les nitrates d'alcalin, les carbonates d'alcalin et les sulfates d'alcalin.

5. Substrat selon la revendication 4 **caractérisé en ce que** la teneur en additif est comprise entre 0,01 et 5 % en poids, de préférence entre 0,1 et 3% en poids, par rapport au poids total des constituants de la couche d'émail.

6. Substrat selon l'une des revendications 1 à 5 **caractérisé en ce que** la couche d'émail après séchage à une température inférieure à 250°C, a une épaisseur comprise entre 10 et 200 µm, de préférence entre 20 et 150 µm et, encore plus préférentiellement entre 30 et 120 µm.

7. Procédé de préparation d'un substrat en verre ou en vitrocéramique revêtu d'une couche d'émail selon l'une des revendications 1 à 6 dans lequel :
(a) on dépose, sur au moins une partie d'une des faces dudit substrat, une couche d'émail comprenant des constituants inorganiques dont au moins une fritte de verre et au moins un pigment, et 6 à 8,5% en poids par rapport aux constituants inorganiques d'une résine organique comprenant au moins un composé choisi parmi un monomère de type acrylate présentant une fonctionnalité comprise entre 2 et 6 choisi parmi les composés à base de diméthacrylate, diacrylate, triméthacrylate, triacrylate, tétracrylate et pentacrylate et un oligomère insaturé de type acrylate choisi parmi les polyéther acrylates, les styrène acrylates, les époxy acrylates, les uréthane acrylates, les ammonium acrylates et les polyester acrylates,
(b) on sèche le substrat revêtu à une température inférieure à 250°C, de préférence inférieure à 200°C.

## Patentansprüche

1. Temperierbares Glas- oder Glaskeramiksubstrat, das mindestens teilweise mit einer Emailleschicht beschichtet ist, die ein organisches Harz und anorganische Bestandteile, darunter mindestens eine Glasfritte und mindestens ein Pigment, umfasst, **dadurch gekennzeichnet, dass** das Harz mindestens eine Verbindung umfasst, ausgewählt aus:
- einem Monomer vom Acrylattyp mit einer Funktionalität im Bereich zwischen 2 und 6, ausgewählt aus Verbindungen auf Basis von Dimethacrylat, Diacrylat, Trimethacrylat, Triacrylat, Tetracrylat und Pentacrylat, und
- einem ungesättigten Oligomer vom Acrylattyp, ausgewählt aus Polyetheracrylaten, Styrolacrylaten, Epoxyacrylaten, Urethanacrylaten, Ammoniumacrylaten und Polyesteracrylaten,
wobei der Harzgehalt in der trockenen Emailleschicht bezogen auf die anorganischen Bestandteile im Bereich zwischen 6 und 8,5 Gew.-% liegt.

2. Substrat nach Anspruch 1, **dadurch gekennzeichnet, dass** der Harzgehalt bezogen auf die anorganischen Bestandteile weniger als oder gleich 8 Gew.-% beträgt.

3. Substrat nach einem der Ansprüche 1 oder 2, **dadurch gekennzeichnet, dass** das ungesättigte Oligomer ein Styrolacrylat oder ein Polyurethanacrylat ist.

4. Substrat nach einem der vorstehenden Ansprüche, **dadurch gekennzeichnet, dass** die Emailleschicht zusätzlich mindestens einen Zusatzstoff umfasst, ausgewählt aus Stärke, Oxalaten, Polylactaten, Alkalinitraten, Alkalicarbonaten und Alkalisulfaten.

5. Substrat nach Anspruch 4, **dadurch gekennzeichnet, dass** der Zusatzstoffgehalt bezogen auf das Gesamtgewicht der Bestandteile der Emailleschicht im Bereich zwischen 0,01 und 5 Gew.-%, vorzugsweise zwischen 0,1 und 3 Gew.-% liegt.

6. Substrat nach einem der Ansprüche 1 bis 5, **dadurch gekennzeichnet, dass** die Emailleschicht nach Trocknung bei einer Temperatur von weniger als 250 °C eine Dicke im Bereich zwischen 10 und 200 µm, vorzugsweise zwischen 20 und 150 µm und noch mehr bevorzugt zwischen 30 und 120 µm aufweist.

7. Verfahren zum Herstellen eines Glas- oder Glaskeramiksubstrats, das mit einer Emailleschicht nach einem der Ansprüche 1 bis 6 beschichtet ist, wobei:
(a) auf mindestens einem Teil einer der Seiten des Substrats eine Emailleschicht abgeschieden wird, die anorganische Bestandteile, darunter mindestens eine Glasfritte und mindestens ein Pigment, und bezogen auf die anorganischen Bestandteile zu 6 bis 8,5 Gew.-% ein organisches Harz umfasst, umfassend mindestens eine Verbindung, ausgewählt aus einem Monomer vom Acrylattyp mit einer Funktionalität im Bereich zwischen 2 und 6, ausgewählt aus Verbindungen auf Basis von Dimethacrylat, Diacrylat, Trimethacrylat, Triacrylat, Tetracrylat und Pentacrylat, und ein ungesättigtes Oligomer vom Acrylattyp, ausgewählt aus Polyetheracrylaten, Styrolacrylaten, Epoxyacrylaten, Urethanacrylaten, Ammoniumacrylaten und Polyesteracrylaten,
(b) das beschichtete Substrat bei einer Temperatur von weniger als 250 °C, vorzugsweise von weniger als 200 °C getrocknet wird.

## Claims

1. A temperable glass or glass-ceramic substrate coated at least partially with a layer of enamel comprising an organic resin and inorganic constituents including at least one glass frit and at least one pigment, **characterized in that** said resin comprises at least one compound selected from:
- a monomer of acrylate type having a functionality of between 2 and 6 and selected from compounds based on dimethacrylate, diacrylate, trimethacrylate, triacrylate, tetraacrylate and pentaacrylate, and
- an unsaturated oligomer of acrylate type selected from polyether acrylates, styrene acrylates, epoxy acrylates, urethane acrylates, ammonium acrylates and polyester acrylates,
the content of resin in the dry enamel layer being between 6% and 8.5% by weight relative to the inorganic constituents.

2. The substrate as claimed in claim 1, **characterized in that** the resin content is less than or equal to 8% by weight relative to the inorganic constituents.

3. The substrate as claimed in the preceding claim, **characterized in that** the unsaturated oligomer is a styrene acrylate or a polyurethane acrylate.

4. The substrate as claimed in one of the preceding claims, **characterized in that** the enamel layer additionally comprises at least one additive selected from starch, oxalates, polylactates, alkali metal nitrates, alkali metal carbonates and alkali metal sulfates.

5. The substrate as claimed in claim 4, **characterized in that** the additive content is between 0.01% and 5% by weight, preferably between 0.1% and 3% by weight, relative to the total weight of the constituents of the enamel layer.

6. The substrate as claimed in one of claims 1 to 5, **characterized in that** the enamel layer, after drying at a temperature below 250°C, has a thickness of between 10 and 200 µm, preferably between 20 and 150 µm and, more preferably still, between 30 and 120 µm.

7. A process for preparing a glass or glass-ceramic substrate coated with an enamel layer as claimed in one of claims 1 to 6, wherein:
(a) a layer of enamel comprising inorganic constituents, including at least one glass frit and at least one pigment, and 6% to 8.5% by weight relative to the inorganic constituents of an organic resin comprising at least one compound selected from a monomer having a functionality of between 2 and 6 selected from compounds based on dimethacrylate, diacrylate, trimethacrylate, triacrylate, tetraacrylate and pentaacrylate and an unsaturated oligomer of acrylate type selected from polyether acrylates, styrene acrylates, epoxy acrylates, urethane acrylates, ammonium acrylates and polyester acrylates are deposited on at least one portion of one of the faces of said substrate,
(b) the coated substrate is dried at a temperature below 250°C, preferably below 200°C.
